# EUROPEAN PATENT APPLICATION

(11) **EP 4 474 931 A1**
(43) Date of publication of application: **11.12.2024**
(21) Application number: 23770422.6
(22) Date of filing: 02.03.2023
(51) Int. Cl.: G05B 23/02

(54) **CAUSE INFERENCE DEVICE, CAUSE INFERENCE METHOD, CAUSE INFERENCE SYSTEM, AND TERMINAL DEVICE**

(30) Priority: 16.03.2022 JP 2022040921
(71) Applicant: JFE Steel Corporation, Tokyo 100-0011 (JP)
(72) Inventor: HARADA, Yohei, Tokyo 100-0011 (JP); HIRATA, Takehide, Tokyo 100-0011 (JP)
(74) Representative: Grünecker Patent- und Rechtsanwälte PartG mbB
(86) International application number: PCT/JP2023/007709
(87) International publication number: WO 2023/176464

(57) **Abstract**

A factor inference device is a factor inference device for inferring a factor of a phenomenon in a process includes: a knowledge model acquisition unit configured to acquire a knowledge model having an event occurring in the process as a node and expressed in a network form connecting a plurality of the nodes to each other, with respect to a causal relationship of the phenomenon in the process; an information creation unit configured to create information including at least an abnormality index related to the event based on data collected from the process; a data combining unit configured to associate a node of the knowledge model with the information corresponding to the node; and a factor inference unit configured to infer and present the factor of the phenomenon based on a structure of the knowledge model and the information associated with the node.

## Description

### Field

The present invention relates to a factor inference device, a factor inference method, a factor inference system, and a terminal device.

### Background

Recently, big data analysis and IoT are actively utilized, and a huge amount of data can be acquired. On the other hand, in order to analyze the data and solve a problem, it is necessary to have deep knowledge about an analysis target, and otherwise, it is difficult to correctly utilize the huge amount of data. For that reason, for example, in a case where certain sensor data of a production device shows an unusual behavior, it is difficult to take measures for solving the problem without knowledge about how such behavior affects the quality of the production device or the product.

In addition, with progress of machine learning technique, highly accurate prediction and abnormality detection from huge amount of data have become possible, and have been utilized in various scenes. For example, in the iron and steel industry, using a deep learning technique with manufacturing conditions as input data, prediction of the presence or absence of occurrence of a surface flaw of a product, detection of an equipment abnormality obtained by compositely analyzing information of many monitoring items, and the like are performed.

With progress of utilization of such data, there is still a problem in causing a corresponding action from a result of machine learning, as described above. Specifically, from information of the monitoring item detected as abnormal by a machine learning model, deep knowledge for the analysis target is required as to what kind of trouble may occur by what kind of mechanism. In a case where a user does not have such knowledge, it is difficult for the user to take an action based on the result of the machine learning. In a field, since an expert layer having deep knowledge is limited, output of auxiliary information that results in an appropriate action is required.

### Citation List

### Patent Literature

Patent Literature 1: JP 2019-194849 A Non Patent Literature
Non Patent Literature 1: Marco, "Why should I trust you?:Explaining the predictions of any classifier", Proceedings of the 22nd ACM SIGKDD International Conference on Knowledge Discovery and Data Mining, August 2016, pp. 1135-1144

### Summary

### Technical Problem

As a technique for deriving auxiliary information for leading to an appropriate action, for example, Non-Patent Literature 1 proposes a method of obtaining a numerical value of a relative influence degree for an input variable that has played an important role.

However, in the technique proposed in Non-Patent Literature 1, information regarding a mechanism of how each variable affects prediction or detection is not given. For that reason, currently, the user's knowledge about the prediction and the detection target is used to infer these. Thus, in the case of a non-expert or an inexperienced user, accurate inference cannot be performed, and the inference cannot lead to an appropriate action.

In addition, in the case of machine learning using a large number of variables, even if the user has knowledge of the analysis target, there is a case where a quick action cannot be made due to reasons such as a load or time required for inference.

For example, in the technique proposed in Patent Literature 1, a causal relationship between variables is automatically output, whereby an influence of the variables is presented. However, it is still difficult to say that a non-expert or an inexperienced user can appropriately understand the mechanism only by the relationship between the variables used in the machine learning model.

The present invention has been made in view of the above, and it is an object of the present invention to provide a factor inference device, a factor inference method, a factor inference system, and a terminal device capable of providing useful auxiliary information for solving a problem from operational data such as sensor data and a setting value, and leading to an appropriate and quick action, even in a case where a user who does not have deep knowledge about an analysis target uses the factor inference device, the factor inference method, the factor inference system, and the terminal device.

### Solution to Problem

To solve the above-described problem and achieve the object, a factor inference device for inferring factor of a phenomenon in a process according to the present invention includes: a knowledge model acquisition unit configured to acquire a knowledge model having an event occurring in the process as a node and expressed in a network form connecting a plurality of the nodes to each other, with respect to a causal relationship of the phenomenon in the process; an information creation unit configured to create information including at least an abnormality index related to the event based on data collected from the process; a data combining unit configured to associate a node of the knowledge model with the information corresponding to the node; and a factor inference unit configured to infer and present the factor of the phenomenon based on a structure of the knowledge model and the information associated with the node.

Moreover, in the above-described factor inference device according to the present invention, the factor inference unit is configured to present a causal route connecting the nodes to each other and indicating the causal relationship of the phenomenon, in the knowledge model, and in a case where there is a plurality of the causal routes, rank and present the causal routes based on the information associated with nodes of the causal routes.

Moreover, in the above-described factor inference device according to the present invention, the factor inference unit is configured to rank and present the causal routes based on a number of nodes associated with abnormality indexes indicating abnormalities or a number of nodes selected as the causal routes in a past in the causal

Moreover, in the above-described factor inference device according to the present invention, the factor inference unit is configured to make the knowledge model into blocks based on the information, and present a causal route connecting the nodes to each other and indicating the causal relationship of the phenomenon for each of the blocks in the knowledge model.

Moreover, in the above-described factor inference device according to the present invention, the abnormality index includes at least one of an abnormality degree indicating a degree of abnormality and a classification determined based on a degree of deviation from a normal state determined in advance.

Moreover, in the above-described factor inference device according to the present invention, the information further includes at least one of a data format, a type of equipment and a timing of the event.

Moreover, in the above-described factor inference device according to the present invention, the data format includes any of an observation value, a setting value and a category.

Moreover, in the above-described factor inference device according to the present invention, the timing of the event includes any of at time of setting calculation, during operation time and during non-operation.

To solve the above-described problem and achieve the object, a factor inference method according to the present invention is executed by a device constructed by a computer for inferring a factor of a phenomenon in a process, and includes: a knowledge model acquisition step of acquiring, by a knowledge model acquisition unit included in the computer, a knowledge model having an event occurring in the process as a node and expressed in a network form connecting a plurality of the nodes to each other with respect to a causal relationship of the phenomenon in the process; an information creation step of creating, by an information creation unit included in the computer, information including at least an abnormality index related to the event based on data collected from the process; a data combining step of associating, by a data combining unit included in the computer, a node of the knowledge model with the information corresponding to the node; and a factor inference step of inferring and presenting, by a factor inference unit included in the computer, the factor of the phenomenon based on a structure of the knowledge model and the information associated with the node.

To solve the above-described problem and achieve the object, a factor inference system according to the present invention includes: a factor inference server device; and a terminal device, wherein the factor inference server device includes: a knowledge model acquisition unit configured to acquire a knowledge model having an event occurring in the process as a node and expressed in a network form connecting a plurality of the nodes to each other with respect to a causal relationship of a phenomenon in the process; an information creation unit configured to create information including at least an abnormality index related to the event based on data collected from the process; a data combining unit configured to associate a node of the knowledge model with the information corresponding to the node; a factor inference unit configured to infer a factor of the phenomenon based on a structure of the knowledge model and the information associated with the node; and an output unit configured to output, to the terminal device, information including at least the factor of the phenomenon inferred by the factor inference unit, and the terminal device includes: an information acquisition unit configured to acquire the information including at least the factor of the phenomenon from the factor inference server device; and a display unit configured to display the information acquired by the information acquisition unit.

To solve the above-described problem and achieve the object, a terminal device according to the present invention includes: an information acquisition unit configured to acquire information including at least a factor of a phenomenon in a process from a factor inference server device; and a display unit configured to display the information acquired by the information acquisition unit, wherein the factor of the phenomenon is inferred based on a structure of a knowledge model having an event occurring in the process as a node and expressed in a network form connecting a plurality of the nodes to each other, with respect to a causal relationship of the phenomenon in the process, and information associated with a node of the knowledge model, the information including at least an abnormality index related to the event.

### Advantageous Effects of Invention

According to the factor inference device, the factor inference method, the factor inference system, and the terminal device according to the present invention, even in a case where a user who does not have deep knowledge of an analysis target uses the factor inference device, the factor inference method, the factor inference system, and the terminal device, it is possible to provide useful auxiliary information for solving a problem from operational data such as sensor data and a setting value. As a result, the user can take an appropriate and quick action for solving the problem by using the auxiliary information.

### Brief Description of Drawings

FIG. 1 is a diagram illustrating a schematic configuration of a factor inference device according to an embodiment of the present invention.
FIG. 2 is a flowchart illustrating a procedure of a factor inference method executed by the factor inference device according to the embodiment of the present invention.
FIG. 3 is a diagram illustrating an example of a knowledge model in the factor inference method according to the embodiment of the present invention.
FIG. 4 is a diagram illustrating an example of monitoring items and attribute information registered in the knowledge model in the factor inference method according to the embodiment of the present invention.
FIG. 5 is a diagram illustrating an example in which some nodes of the knowledge model are blocked in the factor inference method according to the embodiment of the present invention.
FIG. 6 is a diagram illustrating an example of an abnormality index (abnormal/normal classification) acquired by a single monitoring system in the factor inference method according to the embodiment of the present invention.
FIG. 7 is a diagram illustrating an example of an abnormality index (abnormality degree) acquired by an abnormality detection system in the factor inference method according to the embodiment of the present invention.
FIG. 8 is a diagram illustrating an example of a factor inference result using an abnormal/normal classification in the factor inference method according to the embodiment of the present invention.
FIG. 9 is a diagram illustrating an example of a factor inference result using an abnormality degree in the factor inference method according to the embodiment of the present invention.
FIG. 10 is a diagram illustrating a modification in a case where the factor inference method according to the embodiment of the present invention is applied to prediction of surface quality of a steel sheet.
FIG. 11 is a diagram illustrating a schematic configuration of a factor inference system according to the embodiment of the present invention.
FIG. 12 is a diagram illustrating an example of a knowledge model in an example of the factor inference method according to the embodiment of the present invention.
FIG. 13 is a diagram illustrating an example of a factor inference result in the example of the factor inference method according to the embodiment of the present invention.

### Description of Embodiments

A factor inference device, a factor inference method, a factor inference system, and a terminal device according to an embodiment of the present invention will be described with reference to the drawings. Note that the present invention is not limited to the following embodiment, and constituent elements in the following embodiment include those that can be easily replaced by persons skilled in the art or those that are substantially the same.

### [Factor Inference Device]

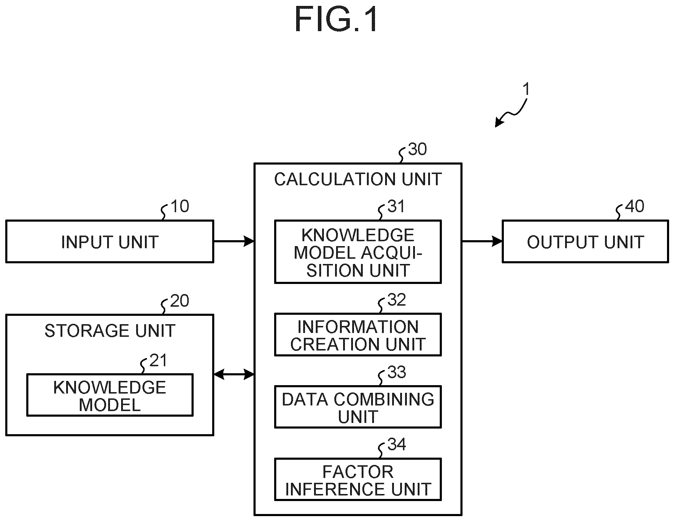

The factor inference device according to the embodiment will be described with reference to FIG. 1. The factor inference device is for inferring a factor of a phenomenon in a process. Examples of the "process" in the present embodiment include a manufacturing process of a steel product, a power generation process of a power generation equipment, and a conveyance process of a conveyance equipment.

In the present embodiment, a description will be given assuming a case where a factor of abnormality in a hot rolling process is inferred. The hot rolling process is a process of rolling a heated slab to a predetermined thickness. In the hot rolling process, processing is performed by a large number of pieces of equipment such as a heating furnace, a rolling mill, and a rapid cooling equipment, but when an abnormality occurs in the pieces of equipment, there is a possibility that a serious trouble such as breakage of a steel sheet during rolling or perforation occurs. For that reason, it is important to infer the factor of the abnormality and present it to a user (operator or the like) to prevent these serious troubles in advance for stable production.

FIG. 1 illustrates an example of a configuration of an information processing device 1 for implementing the factor inference device. The information processing device 1 is implemented by, for example, a general-purpose computer such as a workstation or a personal computer. In addition, as illustrated in FIG. 1, the information processing device 1 includes an input unit 10, a storage unit 20, a calculation unit 30, and an output unit 40.

The input unit 10 is an input means to the calculation unit 30, and is implemented by an input device such as a keyboard, a mouse pointer, or a numeric keypad. The input unit 10 receives an input of information necessary for various calculations in the calculation unit 30.

The storage unit 20 is implemented by a recording medium such as an erasable programmable ROM (EPROM), a hard disk drive (HDD), or a removable medium. Examples of the removable medium include a disk recording medium such as a universal serial bus (USB) memory, a compact disc (CD), a digital versatile disc (DVD), or a Blu-ray (registered trademark) disc (BD).

The storage unit 20 can store an operating system (OS), various programs, various tables, various databases, and the like. The storage unit 20 stores a knowledge model 21. Note that, the storage unit 20 may store, in addition to the knowledge model 21, a calculation result in the calculation unit 30, or the like, as necessary.

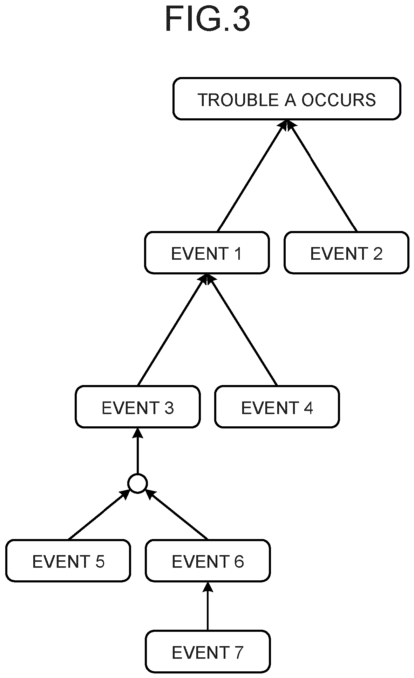

The knowledge model 21 is a model having an event occurring in a process as a node and expressed in a network format connecting nodes to each other, with respect to a causal relationship of the phenomenon in the process. The knowledge model 21 is manually created in advance, for example, and is stored in the storage unit 20 in a form that can be read by a computer. In addition, only one knowledge model 21 may be created so as to be able to cope with a plurality of phenomena (troubles), or a plurality of knowledge models may be created corresponding to a plurality of phenomena. Note that details of the knowledge model 21 will be described later (see FIGS. 3 to 5).

The calculation unit 30 is implemented by, for example, a processor including a central processing unit (CPU) or the like and a memory (main storage unit) including a random access memory (RAM), a read only memory (ROM), or the like.

The calculation unit 30 loads a program into a work area of the main storage unit and executes the program, and controls each component and the like through the execution of the program, thereby implementing a function matching a predetermined purpose. The calculation unit 30 functions as a knowledge model acquisition unit 31, an information creation unit 32, a data combining unit 33, and a factor inference unit 34 through execution of the program described above. Note that FIG. 1 illustrates an example of a case where functions of the respective units of the calculation unit 30 are implemented by one computer; however, a method of implementing the functions of the respective units is not particularly limited, and the functions of the respective units may be implemented respectively by a plurality of computers, for example.

The knowledge model acquisition unit 31 acquires the knowledge model 21 from the storage unit 20.

The information creation unit 32 collects operational data from the process and creates information including at least an abnormality index related to an event based on the operational data. The information created by the information creation unit 32 is information associated with a node of the knowledge model 21 in the data combining unit 33 described later. The information may include, for example, a data format, a type of equipment, a timing of an event, and the like in addition to the abnormality index described above.

The abnormality index includes, for example, an abnormality degree (abnormality score (abnormality value)) indicating a degree of abnormality, a classification determined based on a degree of deviation from a normal state determined in advance, and the like. Note that the "classification determined based on the degree of deviation from the normal state" indicates, for example, a normal/abnormal determination result.

The data format includes, for example, an observation value, a setting value, a category, and the like. Note that the "observation value" indicates sensor data of equipment acquired by a sensor. In addition, the "setting value" indicates a setting value set in the equipment. The "category" indicates a type of data.

The timing of the event includes at the time of setting calculation, during operation, during non-operation, and the like. Note that "at the time of setting calculation" indicates that the event occurred at the time of setting calculation. In addition, "during operation" indicates that the event occurred during operation. In addition, "during non-operation" indicates that the event occurred during non-operation.

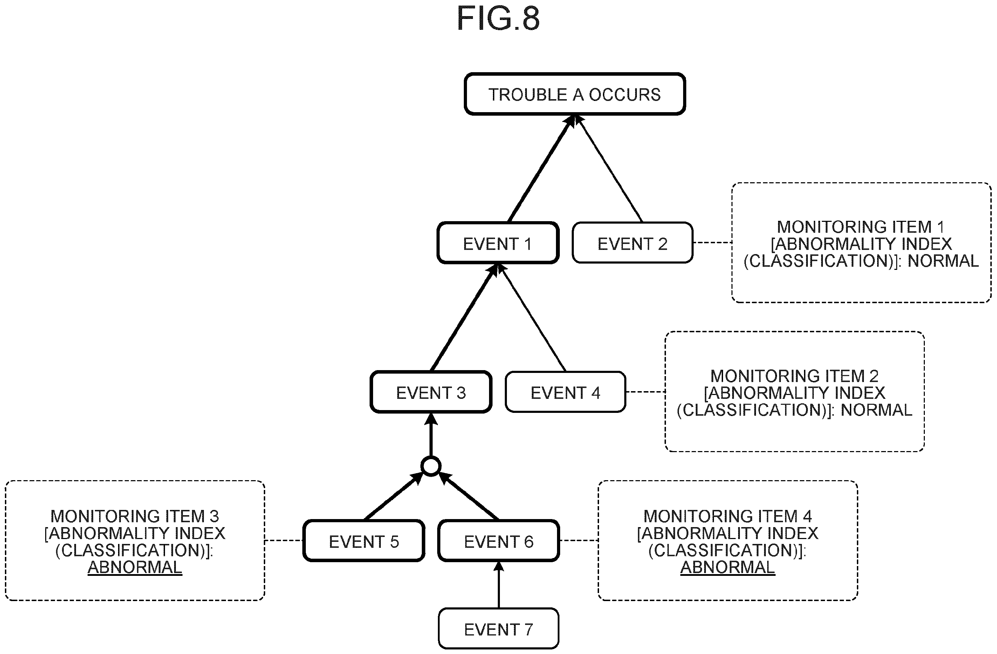

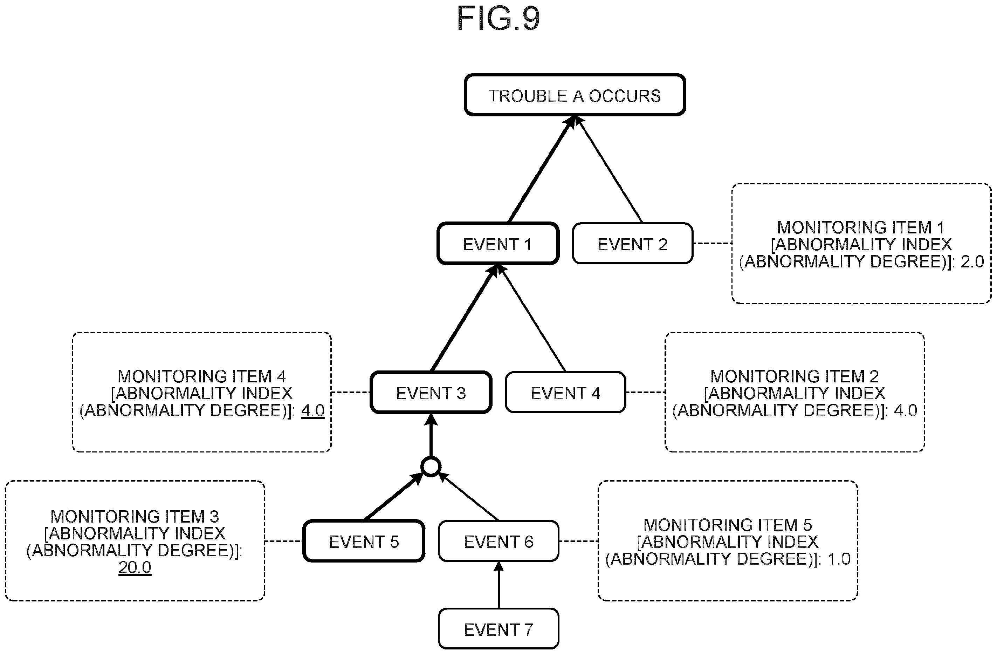

The data combining unit 33 associates the node of the knowledge model 21 with information (information created by the information creation unit 32) corresponding to the node. Note that details of processing by the data combining unit 33 will be described later (see FIGS. 8 and 9) .

The factor inference unit 34 infers a factor of occurrence of the phenomenon based on a structure of the knowledge model 21 and the information associated with the node of the knowledge model 21, and presents the factor to the user. Specifically, the factor inference unit 34 specifies a causal route connecting the nodes to each other and indicating a causal relationship of the phenomenon, in the knowledge model 21. Then, the factor inference unit 34 presents the causal route to the user through the output unit 40.

In addition, in a case where there is a plurality of inferred causal routes, the factor inference unit 34 ranks and presents the causal routes based on information associated with each node of the causal route. In this case, for example, in the inferred causal routes, the factor inference unit 34 can rank and present the causal routes based on the number of nodes associated with abnormality indexes indicating abnormalities or the number of nodes selected as the causal routes in the past.

In addition, the factor inference unit 34 can make the knowledge model 21 into blocks based on information associated with each node, and present the causal route for each block in the knowledge model 21. Note that details of each of pieces of processing in the factor inference unit 34 will be described later (see FIGS. 8 and 9).

The output unit 40 is an output means that outputs a calculation result by the calculation unit 30. The output unit 40 is implemented by, for example, an input device such as a display or a printer. The output unit 40 outputs, for example, the knowledge model 21 created in advance, a result of inference (for example, the causal route) of the factor of the phenomenon in the factor inference unit 34, and the like.

### [Factor Inference Method]

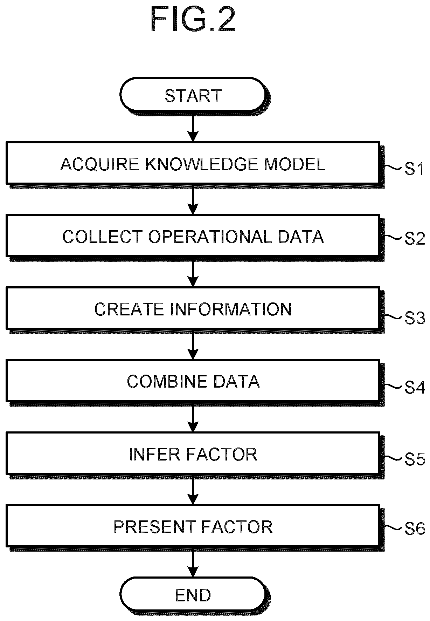

A factor inference method according to the embodiment will be described with reference to FIGS. 2 to 9. In the factor inference method, as illustrated in FIG. 2, a knowledge model acquisition step (step S1), an operational data collection step (step S2), an information creation step (step S3), a data combining step (step S4), a factor inference step (step S5), and a factor presentation step (step S6) are sequentially performed. Details of each step will be described below.

### <Knowledge Model Acquisition Step>

In the knowledge model acquisition step, the knowledge model acquisition unit 31 acquires the knowledge model 21 stored in advance in the storage unit 20. Details of the knowledge model 21 will be described below.

### (Knowledge Model)

As described above, the knowledge model 21 is a model having an event occurring in a process as a node and expressed in a network format connecting nodes to each other, with respect to the causal relationship of the phenomenon in the process. In the present embodiment, in order to infer on a computer how an event related to a process monitoring item develops and leads to what kind of trouble, knowledge about a mechanism of a phenomenon that causes trouble is prepared as the knowledge model 21 that can be processed by the computer.

As illustrated in FIG. 3, the knowledge model 21 expresses the mechanism of trouble occurrence by using a network structure in a form of a causal chain connecting events to each other by a causal relationship. A final result of this causal chain, that is, a destination (uppermost stage) to which events are traced is a trouble of interest in the process. In the knowledge model 21, specifically, events such as a setting condition of equipment, a physical phenomenon, and a state of the equipment related to the trouble are set as nodes in the network structure, and events having a causal relationship are connected by edges.

In the knowledge model 21 illustrated in FIG. 3 as an example, in a case where an event occurs under an And condition, events are connected together by edges via a circle mark. On the other hand, in a case where an event occurs under an Or condition, events are directly connected together by edges without the circle mark. For example, the knowledge model 21 illustrated in the figure indicates that "an event 3 occurs when both an event 5 and an event 6 occur", "an event 1 occurs when either the event 3 or an event 4 occurs", and "a trouble A occurs when either the event 1 or an event 2 occurs".

Specific examples of the trouble (trouble A in FIG. 3) described at the uppermost stage of the knowledge model 21 include perforation, buckling, breakage, and the like in the hot rolling process. In addition, examples of the event indicated by each node of the knowledge model 21 include "uneven heating of the slab in the heating furnace", "uneven heat occurs in the slab", "crown becomes large", and the like.

Note that, in the knowledge model 21 illustrated in FIG. 3, "the trouble A" and "the events 1 to 7" are written for convenience, but specific contents corresponding to the trouble A and the events 1 to 7 are described in actual operation. As described above, in the present embodiment, the knowledge model 21 expressed by the network structure of the causal relationship is created in the form that can be read by the computer.

### (Registration of Monitoring Item in Knowledge Model)

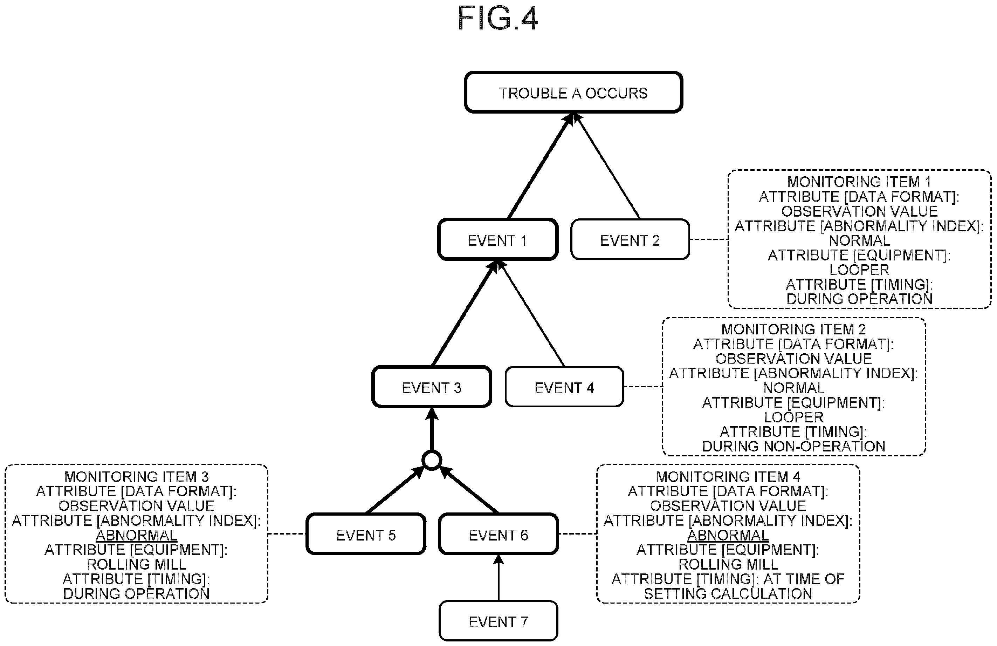

As illustrated in FIG. 4, to nodes of the knowledge model 21, monitoring items related to events of the nodes are assigned. For example, a monitoring item "slab temperature difference" is assigned to a node of an event "uneven heating of the slab in the heating furnace".

In the knowledge model 21 illustrated in FIG. 4, it is described as "monitoring items 1 to 4" for convenience, but specific contents corresponding to the monitoring items 1 to 4 are described in actual operation. Note that some events cannot be monitored (observed) by a sensor or the like. For that reason, as illustrated in the figure, it is not necessary to assign monitoring items to all the nodes, and there may be a node having no monitoring item (see, for example, the events 1 and 3).

### (Registration of Attribute Information in Knowledge Model)

As illustrated in FIG. 4, attribute information is assigned to the nodes (nodes in which monitoring items are registered) of the knowledge model 21. The attribute information includes at least an abnormality index related to an event. In addition, the attribute information may include, for example, a data format, a type of equipment, a timing of an event, and the like in addition to the abnormality index.

The abnormality index includes, for example, an abnormality degree (abnormality score) indicating a degree of abnormality, a classification determined based on a degree of deviation from a normal state determined in advance, and the like. In addition, the data format includes, for example, an observation value, a setting value, a category, and the like. In addition, the timing of the event includes at the time of setting calculation, during operation, during non-operation, and the like. Note that, similarly to the monitoring item, it is not necessary to assign the attribute information to all the nodes, and there may be a node having no attribute information (for example, see the events 1 and 3).

Here, the knowledge model 21 can also be presented to the user through, for example, the output unit 40 (for example, a display). At that time, the node in which the monitoring item and the attribute information are registered is selected (clicked), whereby details of the monitoring item and the attribute information of the node may be expanded and displayed by a pop-up or the like as illustrated in FIG. 4.

In addition, when the knowledge model 21 is presented to the user through the output unit 40, the structure of the knowledge model 21 can be limited and presented based on the attribute information assigned to the node. For example, in the knowledge model 21 illustrated in FIG. 4, by limiting the attribute [equipment] to "looper", it is possible to display only the nodes of the events 2 and 4 in which the attribute [equipment] is "looper" and hide the nodes of the events 5 and 6 in which the attribute [equipment] is "rolling mill". In addition, at the time of the factor inference step by the factor inference unit 34, an event having an attribute [equipment] other than "looper" can be excluded from an inference target.

### (Blocking of Knowledge Model)

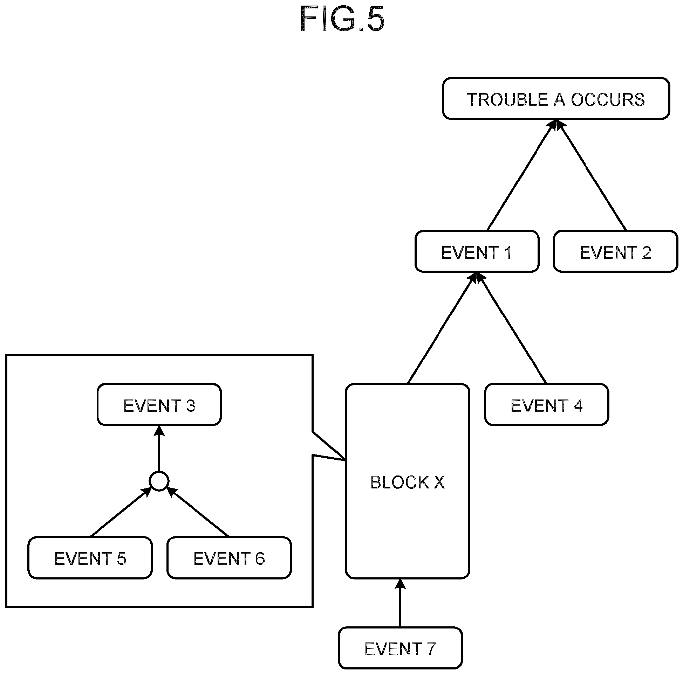

In the knowledge model 21, for example, as illustrated in FIG. 5, it is also possible to block nodes corresponding to some events based on the attribute information. For example, another knowledge model 21 having common attribute information is included in a block X illustrated in the figure. For example, the events 3, 5, and 6 illustrated in the figure are collectively expressed as one block since the attribute [timing] is "at the time of setting calculation".

In addition, it is also possible to further create a block in the block, and hierarchical expression is possible. In addition, when the knowledge model 21 is presented to the user through the output unit 40, it is also possible to display details of included nodes and blocks by clicking a block. As described above, by blocking a part of the knowledge model 21, it is possible to present the causal relationship between the events in the same attribute unit (for example, the same equipment unit), so that a factor of the trouble in the process can be presented more clearly.

### <Operational Data Collection Step and Information Creation Step>

In the operational data collection step, the information creation unit 32 collects operational data from the process. Subsequently, in the information creation step, the information creation unit 32 creates information including at least an abnormality index related to an event based on the collected operational data. In the operational data collection step and the information creation step, it is possible to collect the operational data and create the information including the abnormality index through, for example, an existing single monitoring system, abnormality detection system, or the like.

### (Single Monitoring System)

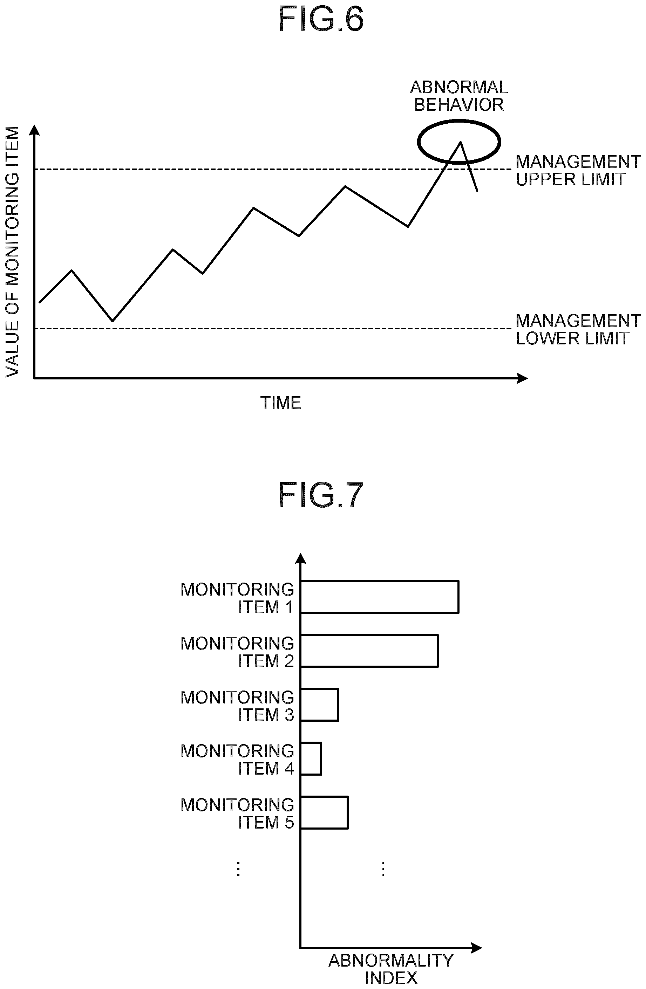

In the single monitoring system, a large number of operational data are collected by various sensors or the like installed in equipment, a monitoring item is determined, and then monitoring is performed based on whether or not the monitoring item deviates from a threshold determined in advance. Examples of a monitoring method in the single monitoring system include a method of determining abnormality when there is a deviation of 3σ or more from an average of a distribution at normal time, and a method of determining abnormality in a case where a value of the monitoring item deviates from a range of a management upper limit or a management lower limit as illustrated in FIG. 6, and the like.

Here, since there are a wide variety of operational data, it is difficult to monitor all of the operational data, and even if there is data indicating abnormal behavior, deep knowledge of each equipment and process is required to determine an influence on production from the data. For that reason, it is difficult to determine the influence on the production from the data unless the user is an expert layer. Thus, in the present embodiment, the abnormality index acquired by the single monitoring system and the knowledge model 21 are used to infer the factor of the trouble. Note that the abnormality index acquired by the single monitoring system may be an abnormal/normal classification (determination result) as illustrated in FIG. 6 or an abnormality degree (abnormality score) indicating a degree of abnormality.

### (Abnormality Detection System)

The abnormality detection system incorporates a method using machine learning in order to determine whether equipment indicates an abnormality. While the single monitoring system determines whether there is an abnormality by looking at the single monitoring item, the abnormality detection system determines whether there is an abnormality by compositely looking at a plurality of monitoring items.

As a method of machine learning in the abnormality detection system, it is possible to use, for example, a statistical-based method such as a graphical Gaussian model or principal component analysis, a method based on deep learning such as an auto encoder, or the like. In these methods, data of the monitoring item at the normal time is learned, and whether or not current data is abnormal is output. In the abnormality detection system, for example, as illustrated in FIG. 7, the abnormality degree (abnormality score) for each monitoring item is output, and whether or not the monitoring item is abnormal is determined based on magnitude of the abnormality degree. Examples of the monitoring item in the hot rolling process include "amount of meandering", "load difference", and "slab temperature difference".

Here, the number of monitoring items in the abnormality detection system is as enormous as several thousand items. For that reason, it is difficult to instantaneously determine what kind of trouble is caused from the monitoring item determined to be abnormal. In addition, it is difficult for an inexperienced user who does not have sufficient knowledge about troubles to infer a mechanism by which a phenomenon related to each monitoring item can develop into a trouble, in order to take an action corresponding to the trouble. Thus, in the present embodiment, the factor of trouble is inferred by using the abnormality index acquired by the abnormality detection system and the knowledge model 21.

### <Data Combining Step>

In the data combining step, the data combining unit 33 associates the node of the knowledge model 21 with information (information created by the information creation unit 32) corresponding to the node. In the data combining step, the information associated with the knowledge model 21 is information including at least the abnormality index acquired by the single monitoring system or the abnormality detection system described above.

Examples of the information associated with the knowledge model 21 include an abnormality index, a data format, a type of equipment, a timing of an event, and the like. In addition, examples of the abnormality index include an abnormal/normal classification as indicated in Table 1 and an abnormality degree calculated for each monitoring item as indicated in Table 2. Note that, in Table 1, classification of two patterns of "abnormal/normal" is indicated as an example, but for example, classification of three patterns of "normal/small abnormal/large abnormal" may be used.

**Table 1**

| Monitoring item | Abnormality index (classification) |
|---|---|
| Monitoring item 1 | Normal |
| Monitoring item 2 | Normal |
| Monitoring item 3 | Abnormal |
| Monitoring item 4 | Abnormal |

**Table 2**

| Monitoring item | Abnormality index (abnormality degree) |
|---|---|
| Monitoring item 1 | 2.0 |
| Monitoring item 2 | 4.0 |
| Monitoring item 3 | 20.0 |
| Monitoring item 4 | 4.0 |
| Monitoring item 5 | 1.0 |

### <Factor Inference Step>

In the factor inference step, the factor inference unit 34 infers the factor of the phenomenon based on the structure of the knowledge model 21 and the information associated with the node of the knowledge model 21. In the factor inference step, the knowledge model 21 expressed by a graph structure of the causal chain and the abnormality indexes illustrated in Tables 1 and 2 are used to infer what kind of trouble can occur in the process and how the trouble occurs. Hereinafter, inference using the abnormality index (abnormal/normal classification) in Table 1 and inference using the abnormality index (abnormality degree) in Table 2 will be separately described.

### (Inference Using Abnormal/Normal Classification)

In the data combining step, the abnormality index in Table 1 is reflected (combined) in the knowledge model 21, and then, as illustrated in FIG. 8, tracing is performed from an event of the monitoring item determined to be abnormal in the result direction of the causal relationship. As a result, a trouble (trouble A in the figure) described in the last reached node is specified as a trouble that can occur in the process. In addition, as an occurrence mechanism of the trouble, a causal route of the event traced earlier is specified as indicated by a thick line in the figure.

Here, in the factor inference step, in a case where there is a connection relationship of And when tracing is performed in the result direction of the causal relationship, tracing is further performed in the result direction only in a case where all the corresponding events are abnormal. For example, in FIG. 8, since both the event 5 and the event 6 are abnormal, tracing is performed to the event 3. In addition, in a case where an event in which the monitoring item is normal is reached in the course of tracing in the result direction, processing of further tracing in the result direction from the event is interrupted.

### (Inference Using Abnormality Degree)

In the data combining step, the abnormality index in Table 2 is reflected (combined) in the knowledge model 21, and then, as illustrated in FIG. 9, tracing is performed according to the abnormality degree from an event of the monitoring item in the result direction of the causal relationship. As a result, a trouble (trouble A in the figure) described in the last reached node is specified as a trouble that can occur in the process. In addition, as an occurrence mechanism of the trouble, a causal route of the event traced earlier is specified as indicated by a thick line in the figure.

Here, in the factor inference step, a causal route having the highest sum of abnormality degrees is specified as an occurrence mechanism described in the last node. For example, in FIG. 9, since the sum of the abnormality degrees of the causal route of the event 5, the event 3, the event 1, the trouble A is the highest at "24.0", the causal route of the event 5, the event 3, the event 1, the trouble A is specified as indicated by a thick line in the figure.

### <Factor Presentation Step>

In the factor presentation step, the factor inference unit 34 presents the factor of the phenomenon inferred in the factor inference step to the user through the output unit 40. In the factor presentation step, specifically, the causal route is presented indicated by the thick line in FIGS. 8 and 9. Note that, in the factor presentation step, the causal route may be highlighted as follows, for example, in addition to the method of highlighting (highlight display) the causal route with the thick line as illustrated in the figure. For example, in the factor presentation step, the nodes and edges included in the causal route may be displayed in different colors from the other nodes and edges, or only the nodes and edges included in the causal route may be displayed and the other nodes and edges may be hidden.

Note that, in the factor inference step, in a case where a plurality of troubles is specified or in a case where a plurality of causal routes is specified, it is only required to present the plurality of troubles and the plurality of troubles to the user through the output unit 40. At that time, for example, in the causal routes specified in the factor inference step, the causal routes may be ranked and presented based on the number of nodes associated with abnormality indexes indicating abnormalities or the number of nodes selected as the causal routes in the past.

### [Modification]

In the embodiment described above, a case has been assumed where the factor of the abnormality in the hot rolling process is inferred, but the present invention can also be applied to prediction of surface quality of a steel sheet, for example. A problem occurs in casting and rolling, and the surface of the steel sheet may be flawed after or during manufacturing. The flawed steel sheet cannot be shipped, which leads to yield loss.

For that reason, a prediction model (machine learning model) has been developed for predicting presence or absence of occurrence of flaws from manufacturing conditions of the steel sheet. In this technique, it is possible to output, by a numerical value (hereinafter referred to as "influence degree"), an index indicating which one of data items (hereinafter, referred to as "explanatory variables") of used manufacturing conditions affects a result predicted by the prediction model. In a case where it is predicted that a flaw occurs in the steel sheet, the influence degree described above is referred to in order to investigate a cause; however, it is difficult to determine how phenomena of the explanatory variables are associated with the occurrence of the flaw without deep knowledge about a flaw occurrence mechanism.

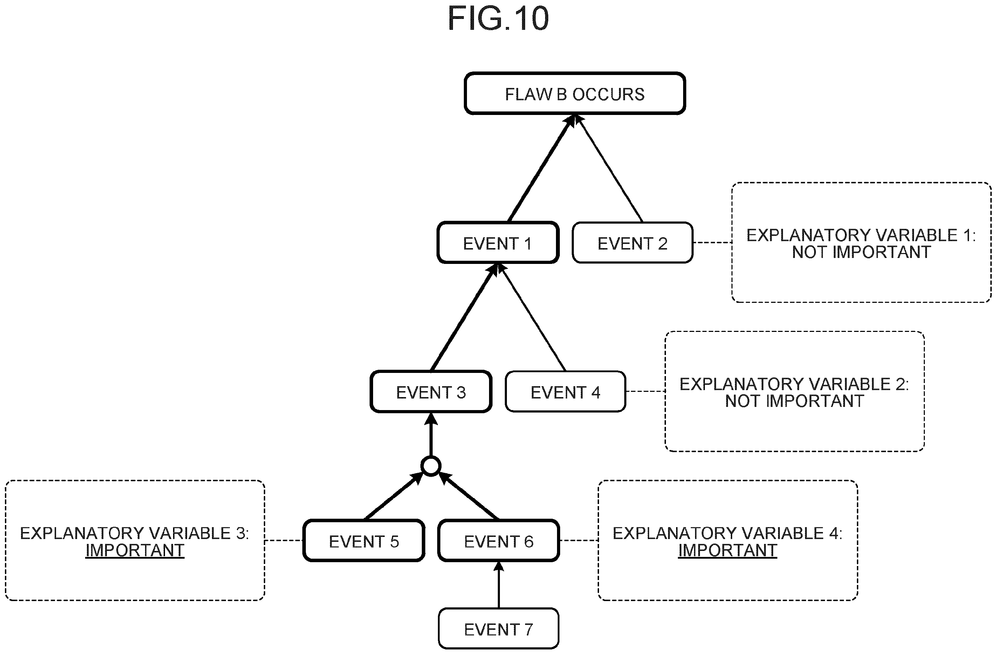

Thus, in the present modification, as illustrated in FIG. 10, the knowledge model 21 expressed by a network structure of a causal relationship between events causing the flaw is created in the form that can be read by the computer. In addition, to nodes of the knowledge model 21, explanatory variables (see explanatory variables 1 to 4 in the figure) of the prediction model related to the events of the nodes are assigned.

In the data combining step of the present modification, each node of the knowledge model 21 is associated with information regarding whether or not the corresponding explanatory variable is important. The information regarding whether or not the corresponding explanatory variable is important can be created based on, for example, whether or not the influence degree of the explanatory variable calculated by the prediction model exceeds a threshold determined in advance.

In the present modification, in the factor inference step, a causal route as indicated by a thick line in FIG. 10 is specified. Then, in the factor presentation step, the specified causal route is presented.

### [Factor Inference System]

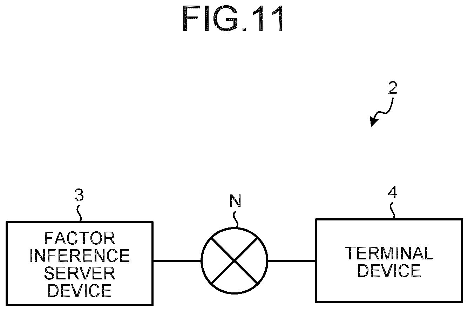

As illustrated in FIG. 11, a factor inference system 2 according to the embodiment includes a factor inference server device 3 and a terminal device 4. The factor inference server device 3 and the terminal device 4 are configured to be communicable through a network N such as an Internet line network, for example. In addition, in the factor inference system 2, the terminal device 4 is arranged, for example, in a steelworks.

The factor inference server device 3 is implemented by, for example, a server arranged on a cloud. The factor inference server device 3 is a network-compatible server device of a factor inference device implemented by the information processing device 1 illustrated in FIG. 1, and has a configuration similar to that of the factor inference device. That is, the factor inference server device 3 includes at least a calculation unit that functions as the knowledge model acquisition unit, the information creation unit, the data combining unit, and the factor inference unit among the constituent elements of the information processing device 1, and an output unit.

The knowledge model acquisition unit of the factor inference server device 3 acquires a knowledge model having an event occurring in a process as a node and expressed in a network format connecting nodes to each other, with respect to a causal relationship of a phenomenon in the process. In addition, the information creation unit of the factor inference server device 3 creates information including at least an abnormality index related to an event based on data collected from the process. In addition, the data combining unit of the factor inference server device 3 associates the node of the knowledge model with corresponding information. In addition, the factor inference unit of the factor inference server device 3 infers a factor of the phenomenon based on a structure of the knowledge model and the information associated with the node. In addition, the output unit of the factor inference server device 3 outputs information including at least the factor of the phenomenon inferred by the factor inference unit to the terminal device 4 via the network N.

The terminal device 4 acquires and displays various types of information from the factor inference server device 3 through the network N. The terminal device 4 is implemented by, for example, a general-purpose computer such as a personal computer or a mobile information processing device such as a tablet computer. In addition, the terminal device 4 includes a calculation unit that functions as an information acquisition unit and a display unit. In addition, an external display such as a liquid crystal display (LCD), an organic EL display (OLED), or a touch panel display is connected to the terminal device 4.

The information acquisition unit of the terminal device 4 acquires, from the factor inference server device 3, information including at least the factor of the phenomenon inferred by the factor inference server device 3. The factor of the phenomenon is inferred based on the structure of the knowledge model having the event occurring in the process as the node and expressed in the network format connecting the nodes to each other, with respect to the causal relationship of the phenomenon in the process, and the information associated with the node of the knowledge model. In addition, the information associated with the node of the knowledge model is information including at least an abnormality index related to an event.

In addition, examples of the factor of the phenomenon described above include the entire causal route associating the phenomenon in the process with the factor (see FIGS. 8 and 9), highlighting the causal route of the factor of the phenomenon inferred, a result of ranking a plurality of causal routes, and the like. Then, the display unit of the terminal device 4 displays these pieces of information acquired by the information acquisition unit on the external display described above.

### [Example]

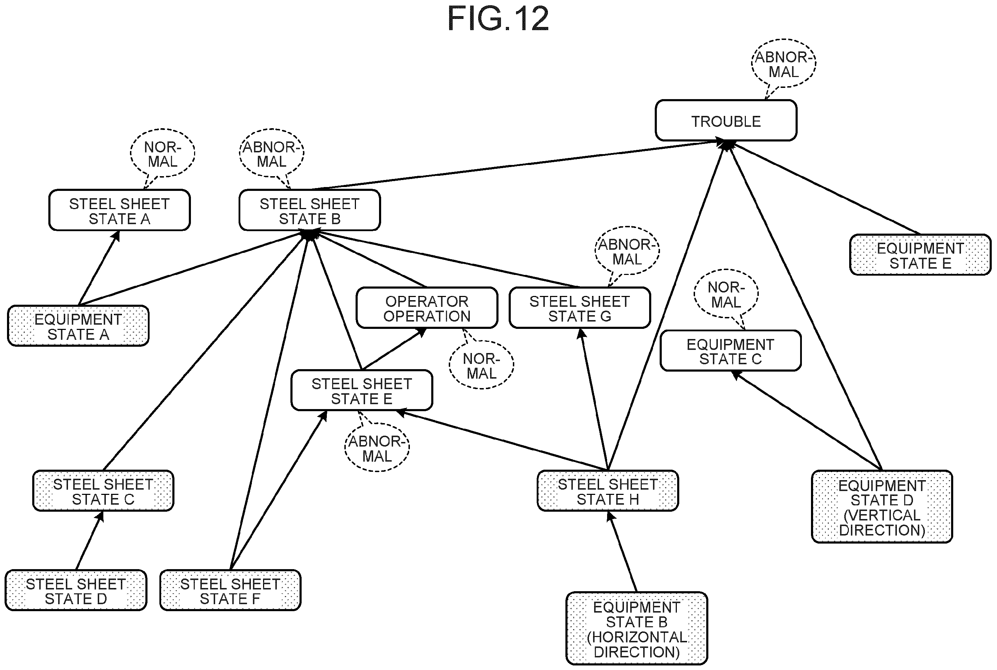

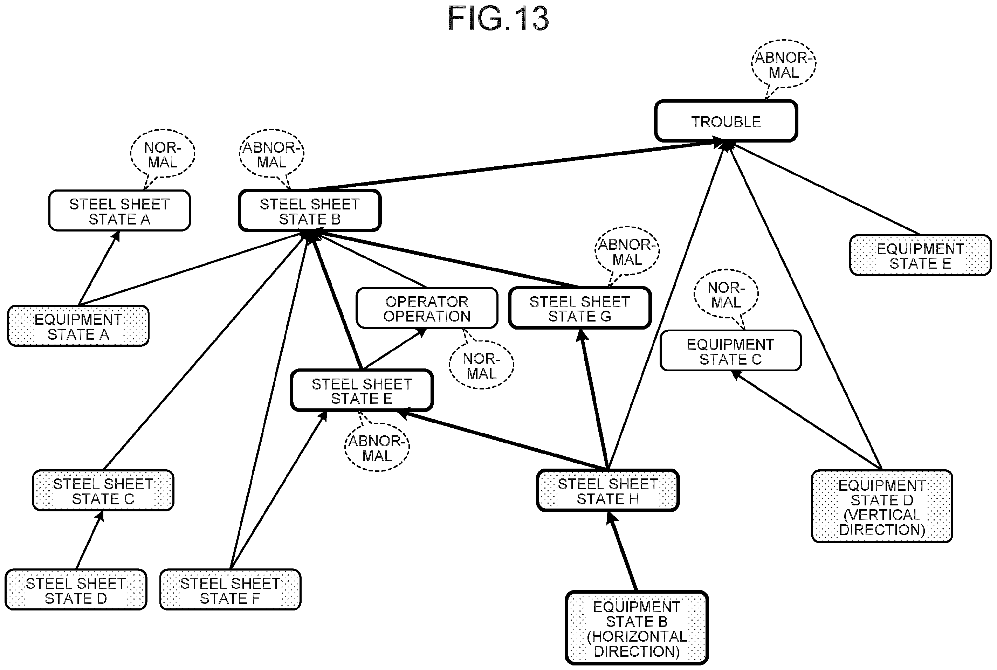

An example in which the factor inference method according to the present invention is applied to a rolling process of a steel sheet will be described with reference to FIGS. 12 and 13. FIG. 12 illustrates a knowledge model used in the present example.

The knowledge model illustrated in FIG. 12 indicates how a plurality of events affects a certain trouble. Examples of "equipment states A to E" among the nodes illustrated in the figure include a machine backlash of a rolling mill, an error with respect to a machine setting, a sensor defect, and the like. In addition, examples of "steel sheet states A to H" include "temperature distribution", "variation in hardness due to temperature", and "steel sheet shape".

In addition, attribute information including the abnormal/normal classification (abnormality index) of data is registered in each node of the knowledge model illustrated in FIG. 12. Note that, since some nodes (phenomena) cannot be directly observed or have no data, inference of a factor is performed using nodes of observable phenomena. In the figure, nodes indicated by hatching indicate nodes of unobservable phenomena, and other nodes indicate nodes of observable phenomena.

FIG. 13 illustrates a result (causal route) of inferring a factor by using the knowledge model illustrated in FIG. 12. As indicated by a thick line in the figure, when abnormal nodes are traced among nodes leading to the trouble, it can be seen that "equipment state B (horizontal direction)" is an underlying cause. As described above, according to the factor inference method according to the present invention, it is possible to easily grasp the underlying cause of the trouble by using the knowledge model.

According to the factor inference device, the factor inference method, the factor inference system, and the terminal device according to the embodiment described above, even in a case where a user (operator or the like) who does not have deep knowledge of an analysis target uses the factor inference device, the factor inference method, the factor inference system, and the terminal device, it is possible to provide useful auxiliary information (causal route) for solving a problem from operational data such as sensor data and a setting value. As a result, the user can take an appropriate and quick action for solving the problem by using the auxiliary information.

Although the factor inference device, the factor inference method, the factor inference system, and the terminal device according to the present invention have been specifically described above with reference to the embodiment and example for carrying out the invention, the gist of the present invention is not limited to these descriptions, and should be broadly interpreted based on the description of the claims. It goes without saying that various changes, modifications, and the like based on these descriptions are also included in the gist of the present invention.

### Reference Signs List

1 INFORMATION PROCESSING DEVICE
10 INPUT UNIT (INPUT MEANS)
20 STORAGE UNIT (STORAGE MEANS)
21 KNOWLEDGE MODEL
30 CALCULATION UNIT (CALCULATION MEANS)
31 KNOWLEDGE MODEL ACQUISITION UNIT (KNOWLEDGE MODEL ACQUISITION MEANS)
32 INFORMATION CREATION UNIT (INFORMATION CREATION MEANS)
33 DATA COMBINING UNIT (DATA COMBINING MEANS)
34 FACTOR INFERENCE UNIT (FACTOR INFERENCE MEANS)
40 OUTPUT UNIT (OUTPUT MEANS)
2 FACTOR INFERENCE SYSTEM
3 FACTOR INFERENCE SERVER DEVICE
4 TERMINAL DEVICE
N NETWORK

## Claims

1. A factor inference device for inferring factor of a phenomenon in a process, the factor inference device comprising:
a knowledge model acquisition unit configured to acquire a knowledge model having an event occurring in the process as a node and expressed in a network form connecting a plurality of the nodes to each other, with respect to a causal relationship of the phenomenon in the process;
an information creation unit configured to create information including at least an abnormality index related to the event based on data collected from the process;
a data combining unit configured to associate a node of the knowledge model with the information corresponding to the node; and
a factor inference unit configured to infer and present the factor of the phenomenon based on a structure of the knowledge model and the information associated with the node.

2. The factor inference device according to claim 1, wherein the factor inference unit is configured to
present a causal route connecting the nodes to each other and indicating the causal relationship of the phenomenon, in the knowledge model, and
in a case where there is a plurality of the causal routes, rank and present the causal routes based on the information associated with nodes of the causal routes.

3. The factor inference device according to claim 2, wherein the factor inference unit is configured to rank and present the causal routes based on a number of nodes associated with abnormality indexes indicating abnormalities or a number of nodes selected as the causal routes in a past in the causal routes.

4. The factor inference device according to any one of claims 1 to 3, wherein the factor inference unit is configured to
make the knowledge model into blocks based on the information, and
present a causal route connecting the nodes to each other and indicating the causal relationship of the phenomenon for each of the blocks in the knowledge model.

5. The factor inference device according to any one of claims 1 to 4, wherein the abnormality index includes at least one of an abnormality degree indicating a degree of abnormality and a classification determined based on a degree of deviation from a normal state determined in advance.

6. The factor inference device according to any one of claims 1 to 5, wherein the information further includes at least one of a data format, a type of equipment and a timing of the event.

7. The factor inference device according to claim 6, wherein the data format includes any of an observation value, a setting value and a category.

8. The factor inference device according to claim 6, wherein the timing of the event includes any of at time of setting calculation, during operation time and during non-operation.

9. A factor inference method executed by a device constructed by a computer for inferring a factor of a phenomenon in a process, the factor inference method comprising:
a knowledge model acquisition step of acquiring, by a knowledge model acquisition unit included in the computer, a knowledge model having an event occurring in the process as a node and expressed in a network form connecting a plurality of the nodes to each other with respect to a causal relationship of the phenomenon in the process;
an information creation step of creating, by an information creation unit included in the computer, information including at least an abnormality index related to the event based on data collected from the process;
a data combining step of associating, by a data combining unit included in the computer, a node of the knowledge model with the information corresponding to the node; and
a factor inference step of inferring and presenting, by a factor inference unit included in the computer, the factor of the phenomenon based on a structure of the knowledge model and the information associated with the node.

10. A factor inference system comprising:
a factor inference server device; and
a terminal device, wherein
the factor inference server device includes:
a knowledge model acquisition unit configured to acquire a knowledge model having an event occurring in the process as a node and expressed in a network form connecting a plurality of the nodes to each other with respect to a causal relationship of a phenomenon in the process;
an information creation unit configured to create information including at least an abnormality index related to the event based on data collected from the process;
a data combining unit configured to associate a node of the knowledge model with the information corresponding to the node;
a factor inference unit configured to infer a factor of the phenomenon based on a structure of the knowledge model and the information associated with the node; and
an output unit configured to output, to the terminal device, information including at least the factor of the phenomenon inferred by the factor inference unit, and
the terminal device includes:
an information acquisition unit configured to acquire the information including at least the factor of the phenomenon from the factor inference server device; and
a display unit configured to display the information acquired by the information acquisition unit.

11. A terminal device comprising:
an information acquisition unit configured to acquire information including at least a factor of a phenomenon in a process from a factor inference server device; and
a display unit configured to display the information acquired by the information acquisition unit, wherein
the factor of the phenomenon is inferred based on a structure of a knowledge model having an event occurring in the process as a node and expressed in a network form connecting a plurality of the nodes to each other, with respect to a causal relationship of the phenomenon in the process, and information associated with a node of the knowledge model, the information including at least an abnormality index related to the event.
